# EUROPEAN PATENT APPLICATION

(11) **EP 4 757 107 A1**
(43) Date of publication of application: **10.06.2026**
(21) Application number: 24862957.8
(22) Date of filing: 27.05.2024
(51) Int. Cl.: H02J 7/00

(54) **ELECTRONIC DEVICE FOR CHARGING BATTERY BY USING POWER INPUT FROM POWER SUPPLY DEVICE**

(30) Priority: 04.09.2023 KR 20230116897; 23.11.2023 KR 20230163975
(71) Applicant: Samsung Electronics Co., Ltd., Suwon-si, Gyeonggi-do 16677 (KR)
(72) Inventor: OH, Hyunjun, Suwon-si, Gyeonggi-do 16677 (KR); KIM, Yeongil, Suwon-si, Gyeonggi-do 16677 (KR); RYU, Sanghyun, Suwon-si, Gyeonggi-do 16677 (KR); PARK, Sehyoung, Suwon-si, Gyeonggi-do 16677 (KR); CHOI, Hangseok, Suwon-si, Gyeonggi-do 16677 (KR)
(74) Representative: HGF
(86) International application number: PCT/KR2024/007171
(87) International publication number: WO 2025/053374

(57) **Abstract**

This electronic device includes: a connector including a power terminal and a data terminal; a communication circuit connected to the data terminal; a power conversion circuit configured to lower a voltage of a power signal input from a power supply device through the power terminal by 1/N times and increase a current thereof by N times to output the lowered voltage and the increased current; a battery connected to the power conversion circuit; and a control circuit connected to the communication circuit and the power conversion circuit. While the battery is being charged by using the power conversion circuit, the control circuit may perform the operations of: controlling the communication circuit to perform communication with the power supply device through the data terminal so as to gradually increase the current of the power signal output from the power supply device to the electronic device from a first initial value to a first target current value set as a maximum output current value; when a communication error occurs before the current value of the power signal output from the power supply device to the electronic device reaches the first target current value, identifying to which current range the output current value belongs among predetermined current ranges; counting the number of occurrences of errors in the identified current range; setting a second target current value less than the first target current value as the maximum output current value on the basis of the counted number of times being equal to or greater than a threshold value; and controlling the communication circuit to perform, with the power supply device through the data terminal, communication for gradually increasing the current of the power signal output from the power supply device to the electronic device from a second initial value to the second target current value.

## Description

### [Technical Field]

Embodiments of the disclosure relate to an electronic device configured to charge a battery by using power input from a power supply device.

### [Background Art]

A power supply device (e.g., a travel adapter (TA)) may perform power delivery (PD) communication with an electronic device through a cable and supply power to a power receiving device (e.g., a smart phone). The power receiving device (e.g., a smart phone) may charge a battery of the power receiving device by using the power input from the power supply device and supply power to a system (or a load circuit) of the power receiving device. For example, the power input from the power supply device to the power receiving device may be distributed to the battery and the system through a charging circuit of the power receiving device.

The above-described information is provided as related art for the purpose of aiding the understanding of the disclosure. No assertion or determination is made as to whether any of the foregoing may be considered prior art with respect to the present disclosure.

### [Disclosure of Invention]

### [Technical Problem]

If the cable connecting the power supply device and the power receiving device is aged or not a specified genuine product, an error may occur in the PD communication between the two devices. Due to the resistance of the cable, the input voltage of the power receiving device (the voltage of a power signal input to the power receiving device from the cable) is relatively lower than the output voltage of the power supply device (the voltage of a power signal output from the power supply device to the cable). The voltage drop caused by the resistance of the cable may be referred to as an IR drop (or a V (voltage) drop).

The allowable value for an IR drop is defined in the USB PD. USB power delivery (PD) is well known as a communication protocol for supplying power between electronic devices connected through a USB cable. For example, when an output current of the power supply device (a current of a power signal output from the power supply device to the cable) is determined to be a maximum of 5 A, the IR drop between power pins in two devices connected through a USB Type C cable may be allowed to be up to about 500mV and the IR drop between ground pins may be allowed to be up to about 250mV. If the cable has been aged or is not a specified genuine product, an IR drop greater than the specified allowable value as described above may occur.

An IR drop equal to or greater than the allowable value may cause an error in the PD communication between the two devices. For example, the power receiving device may perform PD communication with the power supply device in order to adjust the output voltage and/or the output current of the power supply device. During PD communication, the power supply device may not be able to identify data transmitted by the power receiving device. Accordingly, the power supply device may stop supplying power to the power receiving device. Thereafter, the supply of power may be resumed between the two devices through PD communication. However, the supply of power may be stopped again. As the power supply stopping and resumption are repeated, the battery charging is delayed, and thus the voice of the customer (VOC) (e.g., customer complaints about delayed or failed charging) may frequently occur.

In an embodiment of the disclosure, when a communication error has occurred due to the electronic device being connected to the power supply device through an abnormal cable, the electronic device may reduce the output current of the power supply device, so that no more communication errors occur and the battery may be charged more quickly.

The technical problems to be solved in the disclosure are not limited to the technical problems mentioned above, and other technical problems not mentioned may be clearly understood by those skilled in the art to which the disclosure belongs from the descriptions below.

### [Solution to Problem]

According to an embodiment, an electronic device includes a connector including a power terminal and a data terminal; a communication circuit connected to the data terminal; a power conversion circuit configured to reduce a voltage of a power signal input from a power supply device through the power terminal by a factor of 1/N, increase a current of the power signal by a factor of N, and output the power signal with the reduced voltage and increased current; a battery connected to the power conversion circuit; and a control circuit connected to the communication circuit and the power conversion circuit. The control circuit may be configured to, while charging the battery by using the power conversion circuit, perform the operations of: controlling the communication circuit to perform communication with the power supply device via the data terminal so as to increase stepwise a current of a power signal, output from the power supply device to the electronic device, from a first initial value to a first target current value set as a maximum output current value; in the case that an error in the communication occurs before a current value of the power signal output from the power supply device to the electronic device reaches the first target current value, identifying, among predetermined current ranges, a current range to which the output current value belongs; counting a number of error occurrences in the identified current range; based on the counted number being equal to or greater than a threshold value, setting, as the maximum output current value, a second target current value lower than the first target current value; and controlling the communication circuit to perform communication with the power supply device via the data terminal so as to increase stepwise the current of the power signal, output from the power supply device to the electronic device, from a second initial value to the second target current value.

According to an embodiment, an electronic device includes: a connector including a power terminal and a data terminal; a communication circuit connected to the data terminal; a power conversion circuit configured to reduce a voltage of a power signal input from a power supply device through the power terminal by a factor of 1/N, increase a current of the power signal by a factor of N, and output the power signal with the reduced voltage and increased current; a battery connected to the power conversion circuit; and a control circuit connected to the communication circuit and the power conversion circuit. The control circuit may be configured to, while charging the battery by using the power conversion circuit, perform the operations of: controlling the communication circuit to perform communication with the power supply device via the data terminal so as to increase stepwise power, output from the power supply device to the electronic device, from a first initial value to a first target power value set as a maximum output power value; in the case that an error in the communication occurs before the power output from the power supply device reaches the first target power value, identifying, among predetermined power ranges, a power range to which an output power value belongs; counting a number of error occurrences in the identified power range; based on the counted number being equal to or greater than a threshold value, setting, as the maximum output power value, a second target power value lower than the first target power value; and controlling the communication circuit to perform communication with the power supply device via the data terminal so as to increase stepwise the power, output from the power supply device to the electronic device, from a second initial value to the second target power value.

### [Advantageous Effects of Invention]

An embodiment of the disclosure may provide an electronic device configured to, when a communication error occurs due to connection to a power supply device via an abnormal cable, reduce the output current of the power supply device, thereby preventing further communication errors and enabling faster charging of a battery. In addition, various other effects that can be understood directly or indirectly from the disclosure may also be provided.

### [Brief Description of Drawings]

FIG. 1 is a block diagram of an electronic device in a network environment according to various embodiments.
FIG. 2 is a block diagram of a power receiving device configured to charge a battery by using power received from a power supply device according to an embodiment.
FIG. 3 is a diagram illustrating a communication error according to an IR drop.
FIG. 4 is a flowchart illustrating operations of a power receiving device for charging a battery by using a first power conversion circuit according to an embodiment.
FIG. 5 is a flowchart illustrating operations of a power receiving device for resolving a communication error when the communication error occurs during charging of a battery using a first power conversion circuit according to an embodiment.
FIG. 6 is a flowchart illustrating operations of a power receiving device for charging a battery by using a first power conversion circuit according to an embodiment.
FIG. 7 is a flowchart illustrating operations of a power receiving device for resolving a communication error when the communication error occurs during charging of a battery using a first power conversion circuit according to an embodiment.
FIG. 8 is a graph showing operations of a power supply device and a power receiving device for resolving a communication error during battery charging according to an embodiment.
FIG. 9 is a flowchart illustrating operations of a power receiving device for resolving a communication error according to an embodiment.
FIG. 10 is a flowchart illustrating operations of a power receiving device for resolving a communication error according to an embodiment.

Hereinafter, embodiments of the disclosure will be described in detail with reference to the accompanying drawings such that those skilled in the art to which the disclosure belongs may easily practice the disclosure. However, the disclosure may be implemented in various different forms and is not limited to the embodiments described herein. In describing the drawings, the same or similar components may be denoted by the same or similar reference numerals. In addition, in the drawings and the related description, descriptions of well-known functions and configurations will be omitted for clarity and brevity.

### [Mode for the Invention]

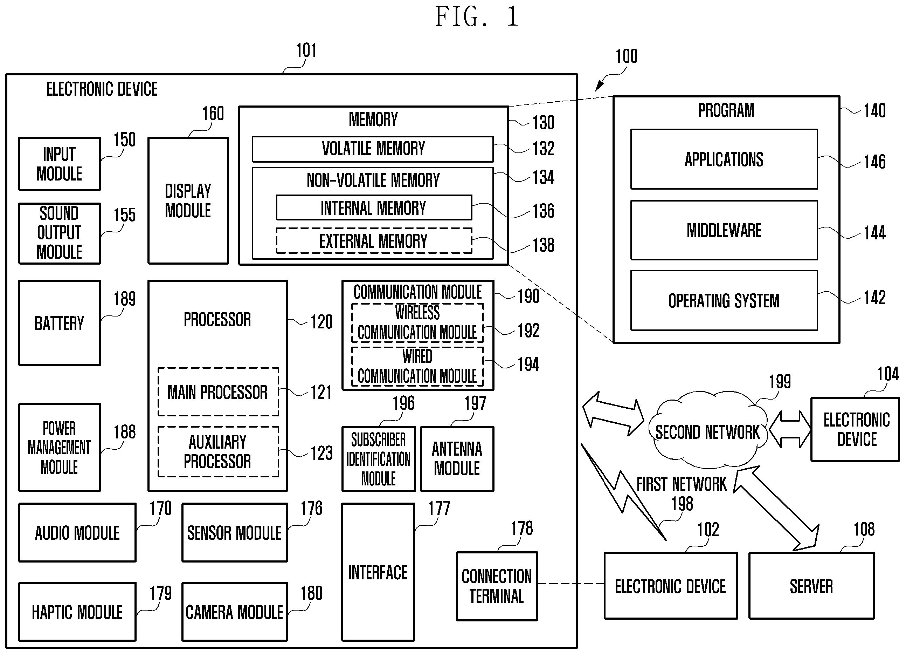

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), a secure processing unit (SPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

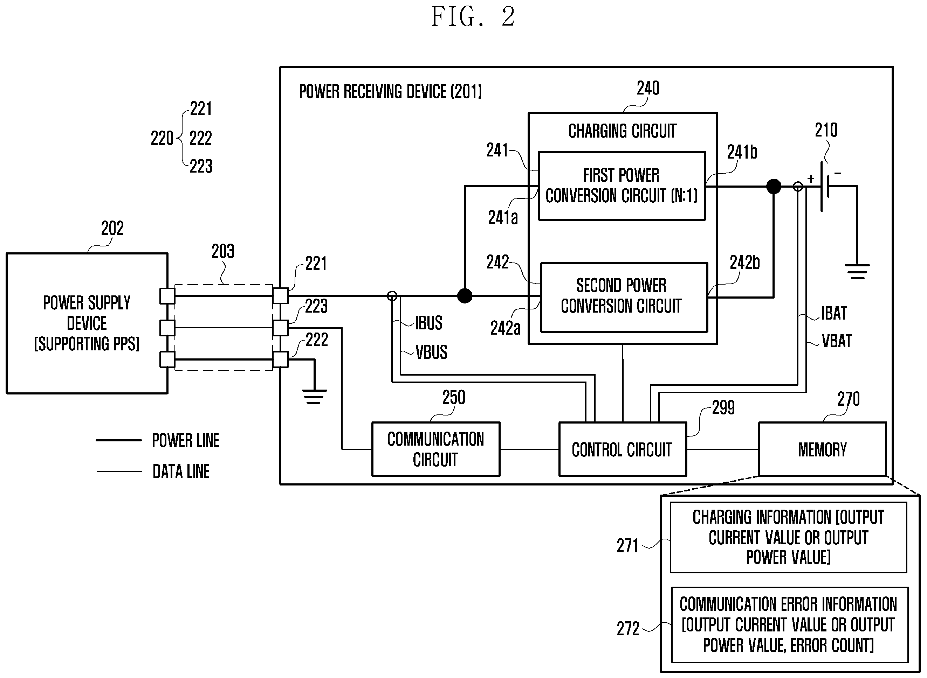

FIG. 2 is a block diagram of a power receiving device 201 configured to charge a battery by using power received from a power supply device 202 according to an embodiment. The power receiving device 201 may be connected to the power supply device 202 through a cable 203 (e.g., a USB Type-C cable) supporting data communication and power reception.

Referring to FIG. 2, the power receiving device 201 (e.g., the electronic device 101 in FIG. 1) may include a battery 210, a connector 220, a charging circuit 240, a communication circuit 250, a memory 270, and a control circuit 299.

The connector 220 (e.g., the connection terminal 178 in FIG. 1) may include a power terminal 221 for receiving a power signal from the power supply device 202, a ground terminal 222 connected to the ground of the power receiving device 201, and a data terminal 223 for data communication with the power supply device 202. For example, the connector 220 may include a socket according to a universal serial bus (USB) Type-C. The socket of the connector 220 may be coupled to the plug of the cable 203. For example, among the pins of the USB Type-C socket, a VBUS pin may be used as the power terminal 221, and a configuration channel (CC) pin and/or a differential signal pin (DP (D+), DN (D-)) may be used as the data terminal 223.

The charging circuit 240 may support constant current (CC) and constant voltage (CV) charging, based on the control of the control circuit 299. For example, while the charging mode is set to a CC mode, the charging circuit 240 may maintain the current of a power signal output from the charging circuit 240 at a constant charging current value set by the control circuit 299, if the voltage of the battery 210 (e.g., the voltage difference between a positive electrode (anode) and a negative electrode (cathode) of the battery) is less than a specified target voltage value. For example, the target voltage value may indicate the voltage of the battery 210 when the battery 210 is fully charged. A full charge may refer to a state of charge (SOC) in which the battery's charge amount reaches a predetermined maximum capacity of 100% without any risk of damage or explosion. As another example, the target voltage value may be a specified voltage (e.g., a voltage corresponding to 98% of maximum capacity). When the voltage (VBAT) of the battery 210 reaches a target voltage value during battery charging, the charging mode may be switched to a CV mode. When the voltage (VBAT) of the battery 210 reaches the target voltage value, and the charging mode is switched from the CC mode to the CV mode, the charging circuit 240 may reduce the current value of a power signal output from the charging circuit 240, based on the control of the control circuit 299, thereby maintaining the input voltage (VBAT) of the battery module 210 at the target voltage value. While the battery module 210 is being charged in the CV mode, when a current (IBAT) of the power signal input from the charging circuit 240 to the battery 210 is reduced to a current value (e.g., top-off current value) specified for charge completion, the charging circuit 240 may complete the charging of the battery 210 by stopping the output of the power signal to the battery 210, based on the control of the control circuit 299.

For example, the charging circuit 240 may include a first power conversion circuit (alternatively, a direct charging circuit) 241 and a second power conversion circuit (alternatively, a switching charging circuit) 242.

The first power conversion circuit 241 may include a first terminal 241a and a second terminal 241b through which power is input and output. The first terminal 241a may be electrically connected to the power terminal 221 of the connector 220. The second terminal 241b may be electrically connected to the positive electrode of the battery 210. The negative electrode of the battery 210 may be connected to the ground of the power receiving device 201. The first power conversion circuit 241 may be configured to convert a voltage value of a power signal input from the first terminal 241a by a fixed voltage conversion ratio (a ratio of the voltage value of an output power signal to the voltage value of an input power signal) and output the power signal to the second terminal 241b. The first power conversion circuit 241 may include a circuit (e.g., a switched capacitor voltage divider (SCVD)) configured such that the ratio of input power to output power is "1." For example, the first power conversion circuit 241 may convert the voltage value of a power signal received from the power terminal 221 through the first terminal 241a at a N-to-1 ratio (e.g., step-down by a factor of 1/N) and convert the current value at a 1:N ratio (e.g., an increase by a factor of N), and may output the power signal to the battery 210 through the second terminal 241b.

The second power conversion circuit (e.g., a buck-boost converter) 242 may include a third terminal 242a and a fourth terminal 242b through which power is input and output. Here, "third" and "fourth" are prefixes used only to provide distinction from the terminals 241a and 241b configured in the first power conversion circuit 241, and do not limit the second power conversion circuit 242 in other aspects. The third terminal 242a may be electrically connected to the power terminal 221 of the connector 220. The fourth terminal 242b may be electrically connected to the positive electrode of the battery 210. The second power conversion circuit 242 may convert the voltage and/or current value of a power signal input from the third terminal 242a and output the power signal to the fourth terminal 242b. For example, the second power conversion circuit 242 may step down or step up the voltage value of a power signal received from the power terminal 221 through the third terminal 242a and output the power signal to the battery 210 through the fourth terminal 242b.

The communication circuit (e.g., a USB controller) 250 may identify the type of an external device connected to the connector 220, based on data received from the external device via the data terminal 223. The communication circuit 250 may transmit identification information indicating the type of the external device to the control circuit 299. The control circuit 299 may perform, based on the identification information, communication with the external device through the communication circuit 250 according to a power delivery (PD) communication protocol, thereby performing an operation of determining, among the two devices 201 and 202, a source for supply power and a sink for receiving power. For example, the power supply device 202 may be recognized as a travel adapter (TA), and thus the power supply device 202 may be determined as a source, and the power receiving device 201 may be determined as a sink. After such a negotiation, the control circuit 299 may perform communication with the power supply device 202 through the communication circuit 250 according to a PD communication protocol (e.g., power data objects (PDOs) or programmable power supply (PPS)), thereby performing an operation of negotiating a current value and/or a voltage value of a power signal to be transmitted from the power supply device 202. The control circuit 299 may control one of the power conversion circuits 241 and 242 to output a power signal having a voltage value and a current value determined by the negotiation result. In one example, when the power supply device 202 is identified as a PPS-supporting model, the control circuit 299 may deactivate the second power conversion circuit 242, activate the first power conversion circuit 241, and supply power to the battery 210 by using the activated first power conversion circuit 241. As another example, when the power supply device 202 is identified as a non-PPS-supporting model, the control circuit 299 may deactivate the first power conversion circuit 241, activate the second power conversion circuit 242, and supply power to the battery 210 by using the activated second power conversion circuit 242.

According to an embodiment, the control circuit 299 may be a component (e.g., a microcontroller unit (MCU)) of a PMIC (e.g., the power management module 188) or a component (e.g., an application processor) (e.g., the processor 120) of a processor.

According to an embodiment, at least one of the first power conversion circuit 241, the second power conversion circuit 242, the communication circuit 250, and the control circuit 299 may be a component integrated in a specific chip (e.g., an interface-integrated (IF) PMIC).

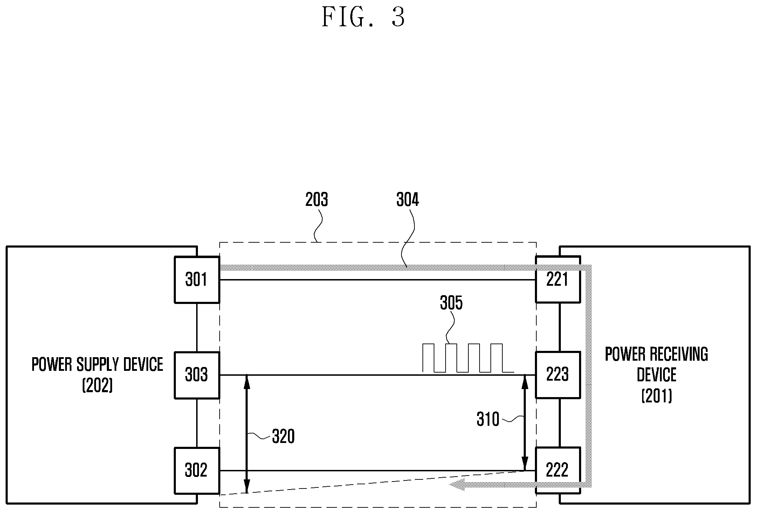

FIG. 3 is a diagram illustrating a communication error according to an IR drop.

When power is supplied from the power supply device 202 to the power receiving device 201, a current 304 flows from a power terminal 301 of the power supply device 202 to the power terminal 221 of the power receiving device 201, and then the current 304 returns to a ground terminal 302 of the power supply device 202 via the ground terminal 222 of the power receiving device 201. While the current 304 flows between the power supply device 202 and the power receiving device 201, communication may be made between the two devices 201 and 202 to adjust a current value. For example, data 305 may be output from the data terminal 223 of the power receiving device 201 to a data terminal 202 of the power supply device 202.

The power receiving device 201 has a first voltage 310 between the data terminal 223 and the grounding terminal 222. The power supply device 202 has a second voltage 320 between the data terminal 303 and the ground terminal 302. When the current 304 does not flow (e.g., when the power supply device 202 stops supplying power to the power receiving device 201), the first voltage 310 and the second voltage 320 may be substantially equal to each other. While the current 304 flows between the power supply device 202 and the power receiving device 201, the second voltage 320 has a value different from the first voltage 310, due to an IR drop in the cable 203. For example, the first voltage 310 may correspond to a low voltage level of data 305 with respect to a ground (GND) in the power receiving device 201. The second voltage 320 may correspond to a low voltage level of the data 305 with respect to a ground (GND) in the power supply device 202. Therefore, the low voltage level in the data 305 received by the power supply device 202 may differ from the low voltage level of the data 305 transmitted by the power receiving device 201. As the current value of a power signal output from the power supply device 202 to the power receiving device 201 increases, the difference between the first voltage 310 and the second voltage 320 increases, and accordingly, the low voltage level of the data 305 received by the power supply device 202 may be in a floating state, so that the power supply device 202 may not identify the data 305. When the power supply device 202 fails to identify the data 305, the power supply device 202 may stop supplying power, and then restart communication with the power receiving device 201 in order to supply power.

For example, when the cable 203 is aged or is not a specified genuine product, the IR drop may exceed a specified allowable value. In this case, before the current value (or power value) of a power signal output from the power supply device 202 reaches a predetermined target value, a communication error may occur in the communication between the two devices 201 and 202, and thus the supply of power may be temporarily stopped. The communication error may be repeated, and thus charging of the battery 210 may be relatively delayed. According to various embodiments of the disclosure, when the same type of communication error is repeated, the target value may be reduced to prevent a communication error of the same type from occurring any longer, and operations for rapidly charging the battery 210 may be performed in the power receiving device 201. Here, a communication error of the same type may refer to a communication error that is repeated when the current value (or power value) of a power signal output from the power supply device 202 is in a specific range. For example, when an output current increases stepwise but fails to reach a target current value (e.g., 5 A) and remains in a specific current range (e.g., 3.4 to 3.6 A), a communication error may be repeated. In another example, when output power increases stepwise but fails to reach a target power value (e.g., 40 W) and remains in a specific power range, an error may be repeated.

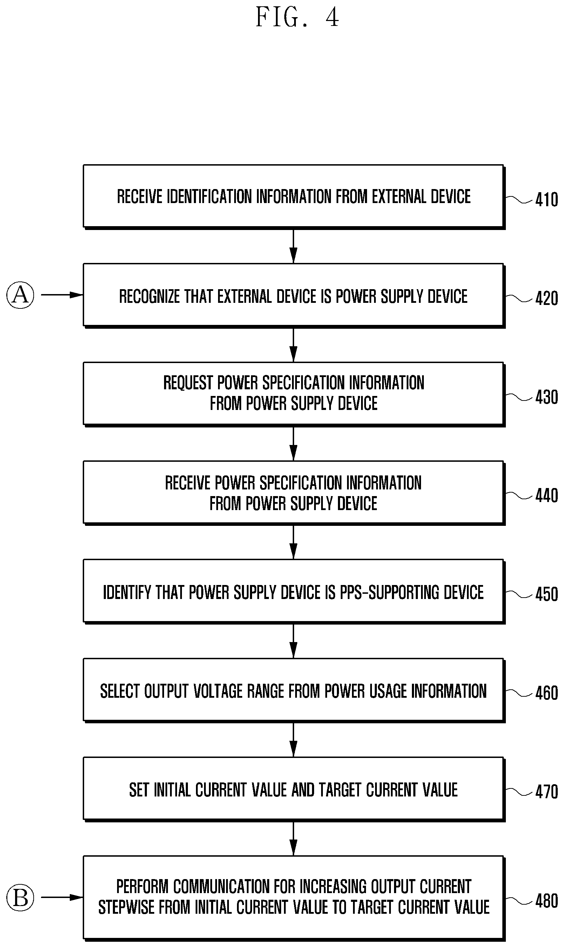

FIG. 4 is a flowchart illustrating operations of the power receiving device 201 for charging the battery 210 by using the first power conversion circuit 241 according to an embodiment. The operations in FIG. 4 will be described with reference to FIG. 2.

In operation 410, the communication circuit 250 may receive identification information from an external device via the data terminal 223 and output the identification information to the control circuit 299.

In operation 420, the control circuit 299 may recognize that the external device connected to the connector 220 is the power supply device 202 (e.g., a TA), based on the identification information received from the communication circuit 250.

In operation 430, based on the recognition that the device connected to the connector 220 is the power supply device 202, the control circuit 299 may control the communication circuit 250 to make a request to the power supply device 202 for power specification information (i.e., a charging profile) indicating the specification or capability of power that the power supply device 202 can supply. The communication circuit 250 may transmit, under control of the control circuit 299, a message requesting the power specification information to the power supply device 202 via the data terminal 223. In response to the request from the communication circuit 250, the power supply device 202 may provide the power specification information to the communication circuit 250.

In operation 440, the control circuit 299 may receive the power specification information from the power supply device 202 via the communication circuit 250.

In operation 450, the control circuit 299 may identify that the power supply device 202 is a PPS-supporting device, based on the power specification information. For example, the control circuit 299 may identify that the power supply device 202 is a travel adapter (TA) supporting power data objects (PDOs) or PPS, based on the fact that the power specification information includes information indicating the range (e.g., 3.3 to 11 V, 3.3 to 16 V, or 3.3 to 21 V) of a voltage that the power supply device 202 can supply. Based on the identification of the power supply device 202 as a PPS-supporting model, the control circuit 299 may activate the first power conversion circuit 241 and deactivate the second power conversion circuit 242. Accordingly, the first power conversion circuit 241 may charge the battery 210 by using power received from the power supply device 202 via the power terminal 221. Meanwhile, the power specification information may further include a rated current value. For example, when the maximum output of the power supply device 202 is about 45 W, information indicating "3.3 to 11 V/4.05 A, 3.3 to 16 V/2.8 A, and 3.3 to 21 V/2.1 A" may be included in the received power specification information as rated current values corresponding to the respective voltage ranges. When the power supply device 202 is a model supporting a maximum output of approximately 60 W, information indicating "3.3 to 12 V/5 A" may be included in the power specification information. The rated current value may refer to a maximum current value that the power supply device 202 can output. For example, when a current value of a power signal output from the power supply device 202 to the power receiving device 201 is equal to or greater than a rated current value for a predetermined time, the power supply device 202 may stop outputting the power signal.

In operation 460, the control circuit 299 may select a range of an output voltage (a voltage of the power signal output by the power supply device 202 to the power receiving device 201) from the power specification information. In an embodiment, the output voltage range may be set based on a voltage value and a power conversion ratio of the first power conversion circuit 241 when the battery 210 is fully charged. In an embodiment, when the power conversion ratio of the first power conversion circuit 241 is 2, the output voltage may be set to approximately twice the voltage of the battery 210. For example, when the battery 210 is fully charged, and when the voltage is 5 V and the power conversion ratio is 2, the control circuit 299 may select a voltage range to which 10 (5*2) V belongs as the output voltage range from the specification information. The control circuit 299 may control the communication circuit 250 to transmit information indicating the selected output voltage range to the power supply device 202. The communication circuit 250 may transmit, under control of the control circuit 299, the information indicating the selected output voltage range to the power supply device 202 via the data terminal 223. The power supply device 202 may determine a voltage value of a power signal to be output to the power receiving device 201 in the output voltage range determined by the control circuit 299.

In operation 470, the control circuit 299 may set an initial current value and a target current value of the power signal to be output from the power supply device 202 to the power receiving device 201. The initial current value may be set when the power supply device 202 starts supplying power, and may be set to be lower than the target current value. The control circuit 299 may set the target current value, based on a maximum current value (e.g., a rated current value) that may be output (supplied) by the power supply device 202. In an embodiment, the control circuit 299 may set the maximum output current value (e.g., a rated current value) of the power supply device 202 as the target current value. For example, when the output voltage range selected from the power specification information is 3.3 to 11 V and a corresponding rated current value is 4.05 A, the target current value may be set to 4.05 A. The target current value may be set in various ways, depending on the battery state (e.g., voltage state or temperature state) of the power receiving device 201, the range of the received current value, and a mode configuration for long battery life.

In operation 480, the control circuit 299 may control the communication circuit 250 to perform communication with the power supply device 202 via the data terminal 223 in order to increase an output current of the power supply device 202 in a stepwise manner (e.g., in increments of about 200 mA) from an initial current value to a target current value. In an embodiment, the amount of increase in the output current may be variable. The communication circuit 250 may perform, under control of the control circuit 299, an operation of increasing the output current of the power supply device 202 to the target current value. For example, the control circuit 299 may control the communication circuit 250 to output, to the power supply device 202, a message requesting the power supply device 202 to output a power signal having the initial current value (e.g., about 1 A when the target current value is 5 A) to the power receiving device 201. The communication circuit 250 may output the message to the power supply device 202 via the data terminal 223. The communication circuit 250 may notify the control circuit 299 that the request message has been output to the power supply device 202, and in response thereto, the control circuit 299 may store the output current value (initial current value) in the memory 270 (e.g., the volatile memory 132 or the non-volatile memory 134 in FIG. 1) as charging information 271. In response to receiving the request message, the power supply device 202 may output a power signal having the initial current value to the power receiving device 201. The first power conversion circuit 241 may receive the power signal via the power terminal 221 and charge the battery 210 by using the received power. The control circuit 299 may request the communication circuit 250 to output a power signal and then wait for a specified time. After the waiting time has elapsed, the control circuit 299 may control the communication circuit 250 to output a message requesting an increase in the current value by one step (e.g., 200 mA) to the power supply device 202. For example, the control circuit 299 may update the output current value stored in the charging information 271 to a current value increased by one step. The communication for increasing the output current to the target current value and the update of the charging information 271 may be repeated until the output current reaches the target current value. When the output current reaches the target current value, the control circuit 299 may request, via the communication circuit 250, the power supply device 202 to maintain the output current of the power supply device 202 at the target current value, and may charge the battery 210 by using the first power conversion circuit 241.

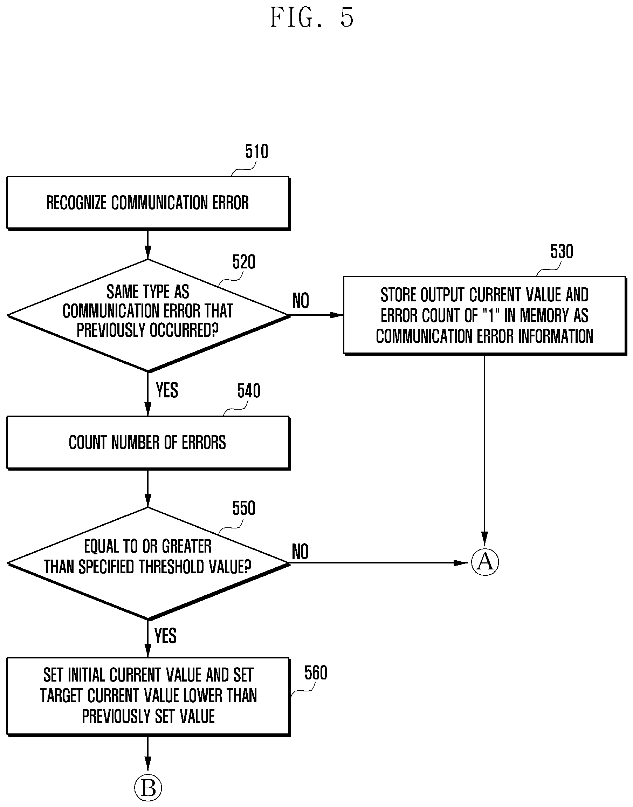

FIG. 5 is a flowchart illustrating operations of the power receiving device 201 for resolving a communication error when the communication error occurs while a battery 210 is charged using the first power conversion circuit 241 according to an embodiment. While communication (e.g., operation 480) is being performed between the two devices 201 and 202, a communication error may occur before a current of a power signal output from the power supply device 202 reaches a target current value. When a communication error occurs, the supply of power may be temporarily stopped, and operations in FIG. 5 may be performed. The operations in FIG. 5 will be described with reference to FIG. 2.

In operation 510, the control circuit 299 may recognize that there is an error in communication for increasing an output current of the power supply device 202 in a stepwise manner from an initial current value to a target current value. For example, the power supply device 202 may not recognize the content of a message received from the power receiving device 201 and may stop supplying power accordingly. Due to such a communication error, the supply of power may be stopped, and thus an input current (IBUS) may be reduced. The control circuit 299 may identify that the input current (IBUS) does not reach and remains below the initial current value (e.g., the current is converging to 0 A) while monitoring the current (IBUS) input to the power terminal 221 and/or the battery current (IBAT). The control circuit 299 may indirectly recognize the occurrence of a communication error through the identification of the reduction in the input current (IBUS). As another example, the power supply device 202 may transmit, to the power receiving device 201, a message requesting a reset of an output current value and/or an output voltage value for the supply of power, together with stopping the supply of power. The communication circuit 250 may output, to the control circuit 299, the reset request message received from the power supply device 202 via the data terminal 223. The control circuit 299 may recognize the reception of the reset request message as an event caused by a communication error.

In operation 520, the control circuit 299 may identify, in the memory 270, whether a communication error of the same type as the communication error recognized in operation 510 has previously occurred.

According to an embodiment associated with operation 520, the control circuit 299 may acquire an output current value from the charging information 271 stored in the memory 270 when a communication error is recognized. The control circuit 299 may identify whether an output current value that is identical, within a specified error range, to the output current value acquired from the charging information 271 stored in communication error information (e.g., communication error table) 272. For example, when the output current value acquired from the charging information 271 is about 2 A and the allowable error is about 0.1 A, and when the output current value stored in the communication error information is in the range of about 1.9 to 2.1 A, the control circuit 299 may determine that a communication error of the same type as the communication error recognized in operation 510 has previously occurred.

According to another embodiment associated with operation 520, the control circuit 299 may periodically monitor a current (IBUS) input to the power terminal 221 and/or a battery current (IBAT). When a communication error is recognized, the control circuit 299 may identify whether an output current value that is identical, within the specified error range, to a current value (e.g., an input current value IBUS or a battery current value IBAT/N) acquired as a result of monitoring is stored in the communication error information (e.g., the communication error table) 272. When the identical output current value within an error range is stored in the communication error information 272, the control circuit 299 may determine that a communication error of the same type as the communication error recognized in operation 510 has previously occurred.

When the identical current value within the error range is not present in the communication error information 272 (e.g., when the communication error is recognized for the first time), in operation 530, the control circuit 299 may store the output current value acquired from the charging information 271 (or the current value acquired as a result of monitoring) and an error count of "1" corresponding thereto, in the memory 270 as the communication error information 272. The control circuit 299 may perform an operation for resetting the output current value and/or the output voltage value after performing operation 530. For example, the control circuit 299 may again perform operations 420 to 480 in FIG. 4. As another example, the operations may be performed again starting from operation 410 or operation 430. When, as a result of performing operation 480 again, the output current reaches the target current value without a communication error, the control circuit 299 may request, via the communication circuit 250, the power supply device 202 to maintain the output current at the target current value, and may charge the battery 210 by using the first power conversion circuit 241.

When the identical output current value within the error range is present in the communication error information 272, the control circuit 299 may count the number of errors in operation 540. For example, if the number of errors stored in the communication error information 272 is "1," the control circuit 299 may increase the number of errors by one to change the number to "2."

In operation 550, the control circuit 299 may identify whether the counted number of errors is equal to or greater than a specified threshold value. For example, when the number of errors is less than a threshold value, the control circuit 299 may perform operations 420 to 480 again. When, as a result of performing operation 480 again, the output current reaches the target current value without any communication error, the control circuit 299 may request, via the communication circuit 250, the power supply device 202 to maintain the output current at the target current value, and may charge the battery 210 by using the first power conversion circuit 241.

When the number of errors is equal to or greater than the threshold value, in operation 560, the control circuit 299 may set the initial current value and set the target current value to values lower than the previously set value (e.g., the value set in operation 470). For example, the control circuit 299 may set the initial current value to a value equal to the initial current value set in operation 470 of FIG. 4. As another example, the control circuit 299 may reset the initial current value to a value greater than the initial current value set in operation 470 in FIG. 4. For example, the control circuit 299 may reduce the target current value by one step (e.g., 200 mA) from a previously set value. As another example, the control circuit 299 may set the target current value to a value lower than the output current value stored in the communication error information 272. Thereafter, the control circuit 299 may perform operation 480 again. When, as a result of performing operation 480 again, the output current reaches the target current value without any communication error, the control circuit 299 may request, via the communication circuit 250, the power supply device 202 to maintain the output current at the target current value, and may charge the battery 210 by using the first power conversion circuit 241.

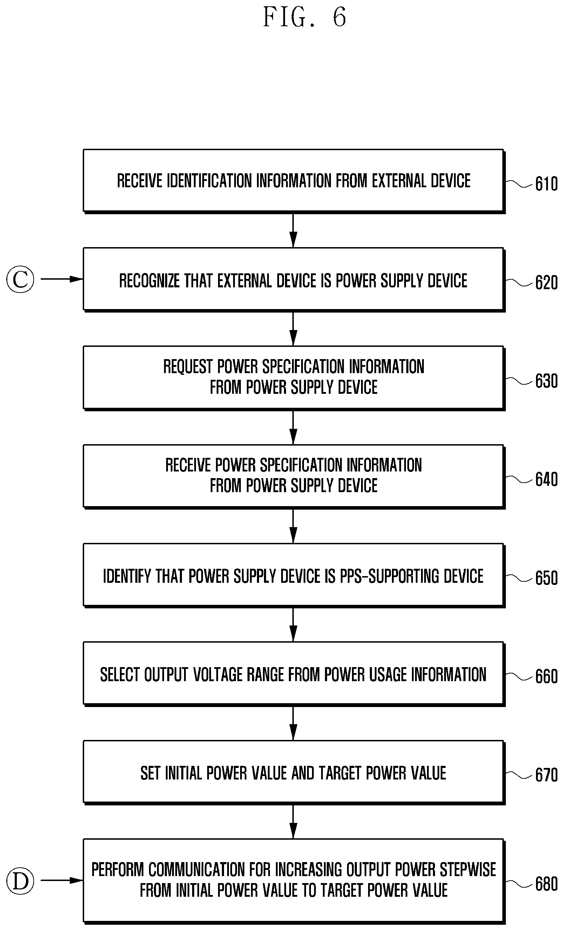

FIG. 6 is a flowchart illustrating operations of the power receiving device 201 for charging the battery 210 by using the first power conversion circuit 241 according to an embodiment. Operations in FIG. 6 will be described with reference to FIG. 2. If any operations in FIG. 6 overlap the operations in FIG. 4, the description of the overlapping operations will be omitted or presented briefly.

In operation 610, the communication circuit 250 may receive identification information from an external device via the data terminal 223 and output the identification information to the control circuit 299.

In operation 620, the control circuit 299 may recognize that the external device connected to the connector 220 is the power supply device 202 (e.g., a TA), based on the identification information received from the communication circuit 250.

In operation 630, based on the recognition that the device connected to the connector 220 is the power supply device 202, the control circuit 299 may control the communication circuit 250 to request the power supply device 202 for power specification information indicating the specification or capability of power that the power supply device 202 can supply.

In operation 640, the control circuit 299 may receive the power specification information from the power supply device 202 via the communication circuit 250.

In operation 650, the control circuit 299 may identify that the power supply device 202 is a PPS-supporting device, based on the power specification information. Based on the power supply device 202 being identified as a PPS-supporting model, the control circuit 299 may activate the first power conversion circuit 241 and deactivate the second power conversion circuit 242. Accordingly, the first power conversion circuit 241 may charge the battery 210 by using power received from the power supply device 202 via the power terminal 221.

In operation 660, the control circuit 299 may select a range of an output voltage (a voltage of a power signal output by the power supply device 202 to the power receiving device 201) from the power specification information. The control circuit 299 may control the communication circuit 250 to transmit information indicating the selected output voltage range to the power supply device 202. The power supply device 202 may determine a voltage value of a power signal to be output to the power receiving device 201 in the output voltage range determined by the control circuit 299.

In operation 670, the control circuit 299 may set an initial power value and a target power value of the power signal to be output from the power supply device 202 to the power receiving device 201. The initial power value is a value set when the power supply device 202 starts supplying power, and may be set to a value lower than the target power value. The target power value may be set based on a battery voltage (VBAT) and a threshold current value specified to protect the battery 210 from overcharging (overvoltage, or overcurrent). The target power value may be set based on the maximum current value (e.g., a rated current value) that the power supply device 202 can output, the power conversion ratio of the first power conversion circuit 241, and the full-charge voltage. For example, when an output voltage range selected from the power specification information is "3.3 to 11 V," a corresponding rated current value is 4.05 A, and the power conversion ratio is "2," the target power value may be set to a value of set current * battery voltage (VBAT) * 2 which is equal to or less than 4.05 A.

In operation 680, the control circuit 299 may control the communication circuit 250 to perform communication with the power supply device 202 via the data terminal 223, in order to increase the output power of the power supply device 202 in a stepwise manner (e.g., about 1 W) from the initial power value to the target power value. The communication circuit 250 may perform, under the control of the control circuit 299, an operation of increasing the output power of the power supply device 202 to the target power value. For example, the control circuit 299 may control the communication circuit 250 to output, to the power supply device 202, a message requesting the power supply device 202 to output a power signal having the initial power value to the power receiving device 201. The communication circuit 250 may notify the control circuit 299 that the request message has been output to the power supply device 202, and in response thereto, the control circuit 299 may store the output power value (the initial power value) in the memory 270 as the charging information 271. The power supply device 202 may output the power signal having the initial power value to the power receiving device 201 in response to the reception of the request message. The first power conversion circuit 241 may receive the power signal via the power terminal 221, and charge the battery 210 by using the received power. The control circuit 299 may request the communication circuit 250 to output the power signal and then wait for a specified time. After the waiting time has elapsed, the control circuit 299 may control the communication circuit 250 to output a message requesting an increase in the power value by one step (e.g., about 1 W) to the power supply device 202. The power supply device 202 may adjust an output voltage and/or an output current to increase the output power to a level requested by the power receiving device 201. The control circuit 299 may update the output power value stored in the charging information 271 to a power value increased by one step. The communication and the update of the charging information 271 for increasing the output power to the target power value may be repeated until the output power reaches the target power value. When the output power reaches the target power value, the control circuit 299 may request, value via the communication circuit 250, the power supply device 202 to maintain the output power at the target power, and may charge the battery 210 by using the first power conversion circuit 241.

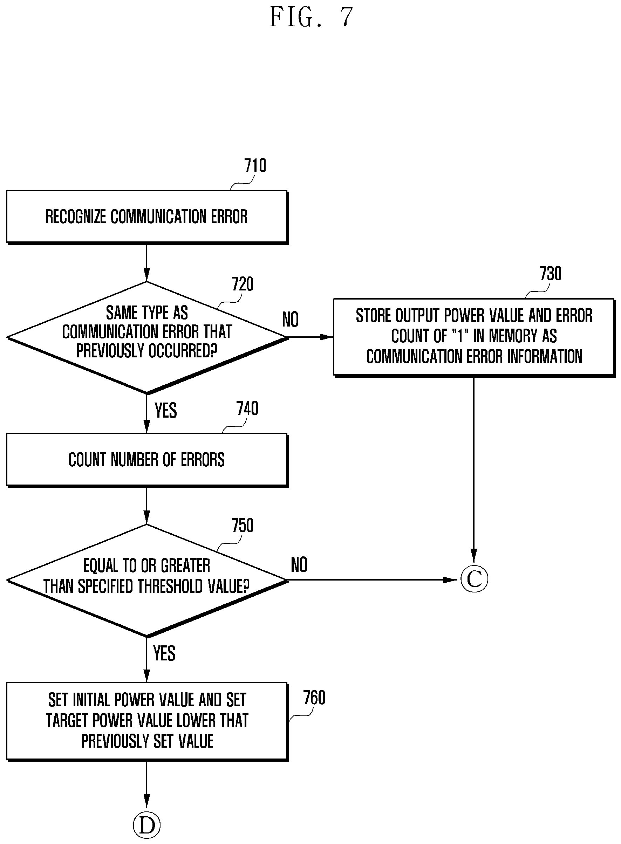

FIG. 7 is a flowchart illustrating operations of the power receiving device 201 for resolving a communication error when the communication error occurs during charging of the battery 210 using the first power conversion circuit 241 according to an embodiment. While communication (e.g., operation 680) is being performed between the two devices 201 and 202, a communication error may occur before power output from the power supply device 202 reaches a target power value. When a communication error occurs, the supply of power may be temporarily stopped and the operations in FIG. 7 may be performed. The operations in FIG. 7 will be described with reference to FIG. 2.

In operation 710, the control circuit 299 may identify that an error has occurred in communication for increasing an output power of the power supply device 202 in a stepwise manner from an initial power value to a target power value. For example, the power supply device 202 may not recognize the content of a message received from the power receiving device 201 and may thereby stop supplying power. While monitoring battery power (IBAT*VBAT), the control circuit 299 may identify that the battery power (IBAT*VBAT) does not reach and remains below the initial power value. The control circuit 299 may indirectly recognize the occurrence of a communication error through the identification of a reduction in the battery power (IBAT*VBAT). As another example, along with stopping the supply of power, the power supply device 202 may transmit, to the power receiving device 201, a message requesting a reset of an output current value and/or an output voltage value for the supply of power. The communication circuit 250 may output the reset request message received from the power supply device 202 via the data terminal 223 to the control circuit 299. The control circuit 299 may recognize the reception of the reset request message as an event caused by a communication error.

In operation 720, the control circuit 299 may identify, in the memory 270, whether a communication error of the same type as the communication error recognized in operation 710 has occurred previously.

According to an embodiment associated with operation 720, when a communication error is recognized, the control circuit 299 may acquire an output power value from the charging information 271 stored in the memory 270. The control circuit 299 may identify whether an output current value that is identical, within a specified error range, to the output power value acquired from the charging information 271 is stored in the communication error information 272. For example, when the output power value acquired from the charging information 272 is 20 W and the allowable error is 0.5 W, and when the output power value stored in the communication error information is between 19.5 W and 20.5 W, the control circuit 299 may determine that a communication error of the same type as the communication error recognized in operation 710 has occurred previously.

According to another embodiment related to operation 720, the control circuit 299 may periodically monitor power (IBUS*VBUS) input to the power terminal 221 and/or the battery power (IBAT*VBAT). When a communication error is recognized, the control circuit 299 may identify whether an output power value that is identical, within a specified error range, to the power value (e.g., input power (IBUS*VBUS) or the battery power (IBAT*VBAT)) acquired as a result of monitoring is stored in the communication error information 272. When the identical output power value within the error range is stored in the communication error information 272, the control circuit 299 may determine that a communication error of the same type as the communication error recognized in operation 710 has occurred previously.

When an identical output power value within the error range is not present in the communication error information 272, in operation 730, the control circuit 299 may store the output power value acquired from the charging information 271 (or the power value acquired as a result of monitoring) and a corresponding error count of '1' in the memory 270 as communication error information 272. After performing operation 730, the control circuit 299 may perform an operation for resetting the output current value and/or the output voltage value. For example, the control circuit 299 may again perform operations 620 to 680 in FIG. 6. As another example, the operations may be performed again, starting from operation 610 or operation 630. When, as a result of performing operation 680 again, the output power reaches the target power value without any communication error, the control circuit 299 may request, via the communication circuit 250, the power supply device 202 to maintain the output power at the target power value, and may charge the battery 210 by using the first power conversion circuit 241.

When an identical output power value within the error range is present in the communication error information 272, in operation 740, the control circuit 299 may count the number of errors. For example, when the number of errors stored in the communication error information 272 is "1," the control circuit 299 may increase the number of errors by one to change the number of errors to "2."

In operation 750, the control circuit 299 may identify whether the counted number of errors is equal to or greater than a specified threshold value. When the number of errors is less than the threshold value, the control circuit 299 may perform operations 620 to 680 again. When, as a result of performing operation 680 again, an output power of the power supply device 202 reaches a target power value without any communication error, the control circuit 299 may request, via the communication circuit 250, the power supply device 202 to maintain the output power at the target power value, and may charge the battery 210 by using the first power conversion circuit 241.

For example, when the number of errors is equal to or greater than the threshold value, in operation 760, the control circuit 299 may set an initial power value and set a target power value to a value lower than a previously set value (e.g., a value set in operation 670). For example, the control circuit 299 may set the initial power value to a value equal to the initial power value set in operation 670 in FIG. 6. As another example, the control circuit 299 may set the initial current value to a value greater than the initial power value set in operation 670 of FIG. 6. The control circuit 299 may reduce the target power value by one step (e.g., 1 W) from the previously set value. Thereafter, the control circuit 299 may perform operation 680 again. When, as a result of performing operation 680 again, an output power of the power supply device 202 reaches the target power value without any communication error, the control circuit 299 may request, via the communication circuit 250, the power supply device 202, to maintain the output power of the power supply device 202 at the target power value, and may charge the battery 210 by using the first power conversion circuit 241.

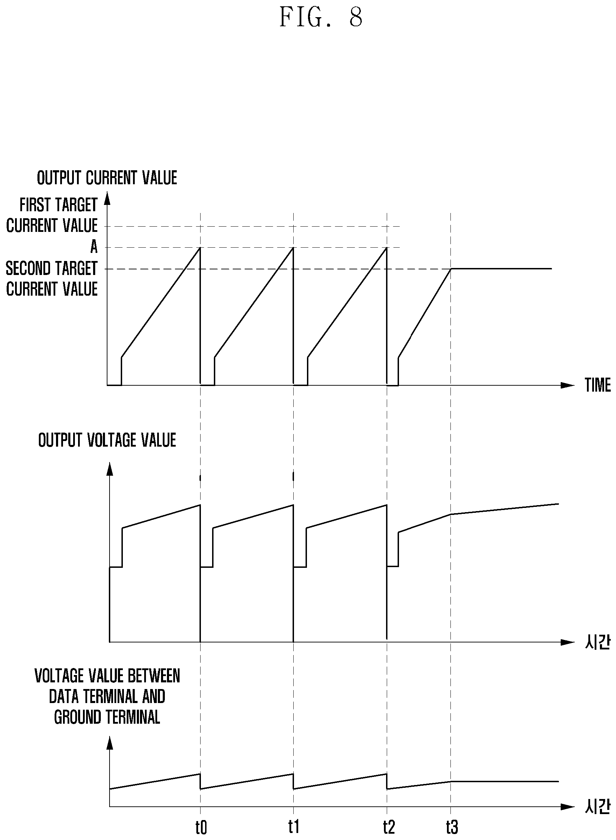

FIG. 8 is a graph illustrating operations of the power supply device 202 and the power receiving device 201 for resolving a communication error during charging of the battery 210 according to an embodiment. The embodiment in FIG. 8 will be described with reference to FIGS. 2 and 3.

The power supply device 202 may increase, in a stepwise manner, a current value of a power signal output to the power receiving device 201 in response to a request from the power receiving device 201. As the output current value increases, a voltage value of the power signal output from the power supply device 202 to the power receiving device 201 may also continuously increase. In addition, due to IR drop in the cable 203, a voltage value between the data terminal 303 and the ground terminal 302 of the power supply device 202 may also continuously increase. Due to the continuous increase of the voltage value, a communication error may occur between the two devices 201 and 202, and the power supply device 202 may stop supplying power. For example, an output current of the power supply device 202 may not reach a first target current value and may increase to an output current value "A," and then the supply of power may be stopped at time point t0 due to a communication error. Afterwards, the output current may rise to "A" at time points t1 and t2 and then the supply of power may be stopped due to a communication error. When a phenomenon in which the output current increases to "A" and then the supply of power is stopped is repeated (e.g., three times), the power receiving device 201 may reduce the target current value to a second target current value. As the target current value is set to be low, no communication error may occur thereafter. Therefore, a current of the power signal output from the power supply device 202 may reach the second target current value at time point t3. For example, the control circuit 299 may transmit, to the power supply device 202 via the communication circuit 250, a message requesting that the output voltage should continuously increase and the output current is maintained at the second target current value until the voltage of the battery 210 reaches a full charge voltage. Accordingly, the power supply device 202 may maintain the current of the power signal output to the power receiving device 201 at the second target current value.

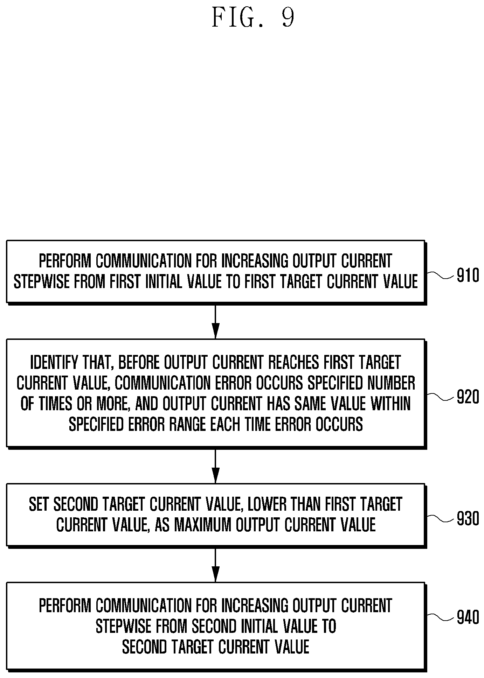

FIG. 9 is a flowchart illustrating operations of the power receiving device 201 for resolving a communication error according to an embodiment. The operations in FIG. 9 may be performed while the power receiving device 201 charges the battery 210 by using the first power conversion circuit 241 and by using power received from the power supply device 202.

In operation 910, the control circuit 299 may control the communication circuit 250 to communicate with the power supply device 202 via the data terminal 223 to increase, in a stepwise manner, a current of a power signal output by the power supply device 202 from the first initial value to a first target current value set as a maximum output current value.

In operation 920, the control circuit 299 may identify that an error in the communication for increasing, in a stepwise manner, the current of the power signal output from the power supply device 202 to the first target current value (e.g., the first target current value in FIG. 8) occurs a specified number of times or more before the current of the power signal reaches the first target current value, and that the current of the power signal output from the power supply device 202 has the same value within a specified error range each time the error occurs. For example, the first target current value may be 5 A, but the output current may increase to about 3.45 to 3.55 A, and a phenomenon in which the supply of power from the power supply device 202 to the power receiving device 201 is stopped due to a communication error may be repeated. For example, the control circuit 299 may periodically monitor an input current (IBUS) and/or a battery current (IBAT) and identify that the phenomenon is repeated, based on the monitoring result. As another example, the control circuit 299 may identify that the phenomenon is repeated, based on the result of updating the communication error information 272. When the phenomenon is repeated a specified number of times or more, the control circuit 299 may perform operation 930 below.

In operation 930, the control circuit 299 may set a second target current value, which is lower than the first target current value, as the maximum output current value, based on the identification in operation 920. For example, the control circuit 299 may set a value lower than an output current value (e.g., the output current value A in FIG. 8) when an error has occurred as the second target current value.

In operation 940, the control circuit 299 may control the communication circuit 250 to communicate with the power supply device 202 via the data terminal 223 to increase, in a stepwise manner, the current of the power signal output from the power supply device 202 from a second initial value (e.g., a value equal to or greater than the first initial value) to the second target current value. As a result of performing operation 940, the output current may reach the second target current value without any communication error. When the output current reaches the second target current value, the control circuit 299 may request, via the communication circuit 250, the power supply device 202 to maintain the output current of the power supply device 202 at the second target current value, and may charge the battery 210 by using the first power conversion circuit 241.

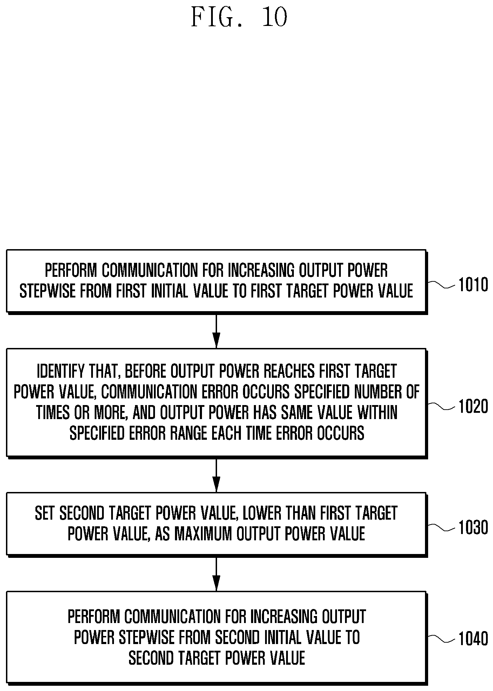

FIG. 10 is a flowchart illustrating operations of the power receiving device 201 for resolving a communication error according to an embodiment. The operations in FIG. 10 may be performed while the power receiving device 201 charges the battery 210 by using the first power conversion circuit 241 and by using the power received from the power supply device 202.

In operation 1010, the control circuit 299 may control the communication circuit 250 to perform communication with the power supply device 202, via the data terminal 223, for the purpose of increasing, in a stepwise manner, power output from the power supply device 202 from a first initial value to a first target power value which is set as a maximum output power value.

In operation 1020, the control circuit 299 may identify that, before the power output from the power supply device 202 reaches the first target power value, an error in communication for increasing the power to the first target power value in a stepwise manner occurs a specified number of times or more, and that the power output from the power supply device 202 has the same value within a specified error range each time the error occurs. For example, a phenomenon in which the first target current value is 40 W, but the output current increase to approximately 34.5 to 35.5 W, and then the supply of power from the power supply device 202 to the power receiving device 201 is stopped due to a communication error may be repeated. For example, the control circuit 299 may periodically monitor an input power (IBUS*VBUS) and/or a battery power (IBAT*VBAT) and identify that the phenomenon is repeated, based on the monitoring result. As another example, the control circuit 299 may identify that the phenomenon is repeated, based on the result of updating the communication error information 272. When this phenomenon is repeated for the specified number of times or more, the control circuit 299 may perform operation 1030 below.

In operation 1030, based on the identification in operation 1020, the control circuit 299 may set a second target power value, which is lower than the first target power value, as a maximum output current value. For example, when an error has occurred, the control circuit 299 may set a value lower than the output power value as the second target current value.

In operation 1040, the control circuit 299 may control the communication circuit 250 to communicate with the power supply device 202 via the data terminal 223 to increase, in a stepwise manner, the power output from the power supply device 202 from a second initial value (e.g., a value equal to or greater than the first initial value) to the second target power value. As a result of performing operation 1040, the output power may reach the second target power value without any communication error. When the output current reaches the second target power value, the control circuit 299 may request, via the communication circuit 250, the power supply device 202 to maintain the output current of the power supply device 202 at the second target current value, and may charge the battery 210 by using the first power conversion circuit 241.

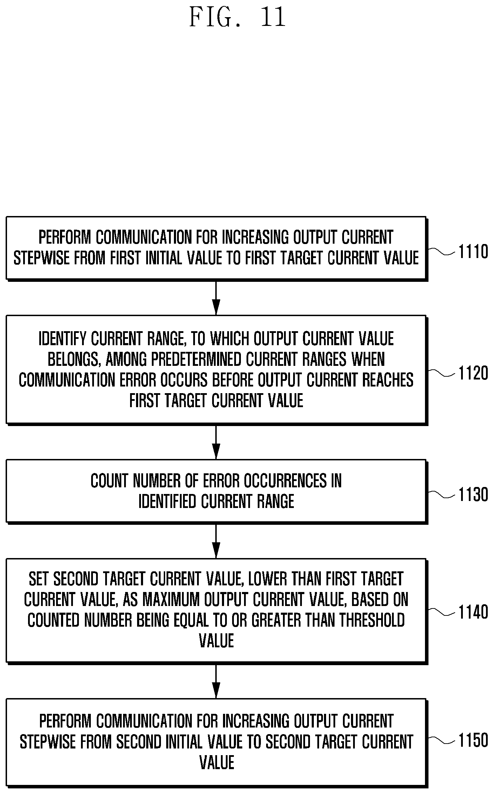

FIG. 11 is a flowchart illustrating operations of the power receiving device 201 for resolving a communication error according to an embodiment. The operations in FIG. 11 may be performed while the power receiving device 201 charges the battery 210 by using the first power conversion circuit 241 and by using power received from the power supply device 202.

In operation 1110, the control circuit 299 may control the communication circuit 250 to communicate with the power supply device 202 via the data terminal 223 to increase, in a stepwise manner, a current of a power signal output from the power supply device 202 from a first initial value to a first target current value which is set as a maximum output current value.

In operation 1120, when an error in the communication for increasing, in a stepwise manner, the current of the power signal output from the power supply device 202 to the first target current value (e.g., the first target current value in FIG. 8) occurs before the current reaches the first target current value, the control circuit 299 may identify a current range, to which the current of the power signal output from the power supply device 202 belongs, among predetermined current ranges. For example, a first current range (2.4 A ≤ current value < 2.6 A), a second current range (2.6 A ≤ current value < 2.8 A), ···, and a third current range (4.8 A ≤ current value < 5 A) may be set. The control circuit 299 may identify a current range to which the current value belongs among the predetermined current ranges.

In operation 1130, the control circuit 299 may count the number of error occurrences in the current range identified in operation 1120.

In operation 1140, the control circuit 299 may set a second target current value, which is lower than the first target current value, as the maximum output current value, based on the number counted in operation 1130 being equal to or greater than a threshold value. For example, when the number of error occurrences in the third current range reaches a specified threshold value, the control circuit 299 may reduce the target current value from 5 A to a value equal to or lower than the minimum value (e.g., 4.8 A) in the third current range.

In operation 1150, the control circuit 299 may control the communication circuit 250 to communicate with the power supply device 202 via the data terminal 223 to increase, in a stepwise manner, the current of the power signal output from the power supply device 202 from a second initial value (e.g., a value equal to or greater than the first initial value) to the second target current value. As a result of performing operation 1150, the output current may reach the second target current value without any communication error. When the output current reaches the second target current value, the control circuit 299 may request, via the communication circuit 250, the power supply device 202 to maintain the output current of the power supply device 202 at the second target current value, and may charge the battery 210 by using the first power conversion circuit 241.

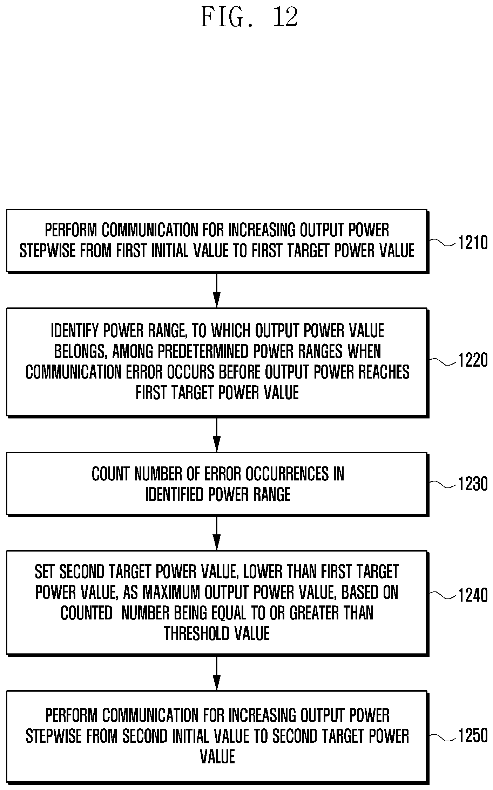

FIG. 12 is a flowchart illustrating operations of the power receiving device 201 for resolving a communication error according to an embodiment. The operations in FIG. 12 may be performed while the power receiving device 201 charges the battery 210 by using the first power conversion circuit 241 and by using power received from the power supply device 202.

In operation 1210, the control circuit 299 may control the communication circuit 250 to communicate with the power supply device 202 via the data terminal 223 to increase, in a stepwise manner, power output from the power supply device 202 from a first initial value to a first target power value which is set as a maximum output power value.

In operation 1220, when an error in the communication for increasing, in a stepwise manner, the power output from the power supply device 202 to the first target power value occurs before the power output from the power supply device 202 reaches the first target power value, the control circuit 299 may identify a power range, to which the power output from the power supply device 202 belongs, among predetermined power ranges. For example, a first power range (18 W ≤ power value < 20 W), a second power range (20 W ≤ power value < 22 W), ..., and a third power range (38 W ≤ power value < 40 W) may be set. The control circuit 299 may identify a power range to which a power value belongs among the set power ranges.

In operation 1230, the control circuit 299 may count the number of error occurrences in the power range identified in operation 1220.

In operation 1240, the control circuit 299 may set a second target power value, which is lower than the first target power value, as the maximum output current value, based on the number counted in operation 1230 being equal to or greater than a threshold value. For example, when the number of error occurrences in the third power range reaches a specified threshold value, the control circuit 299 may reduce the target power value from 40 W to a value equal to or lower than the minimum value (e.g., 38 W) of the third power range.

In operation 1250, the control circuit 299 may control the communication circuit 250 to communicate with the power supply device 202 via the data terminal 223 to increase, in a stepwise manner, the power output from the power supply device 202 from a second initial value (e.g., a value equal to or greater than the first initial value) to the second target power value. As a result of performing operation 1250, the output power may reach the second target power value without any communication error. When the output current reaches the second target power value, the control circuit 299 may request, via the communication circuit 250, the power supply device 202 to maintain the output current at the second target current value, and may charge the battery 210 by using the first power conversion circuit 241.

According to an embodiment, an electronic device 201 may include: a connector 220 including a power terminal 221 and a data terminal 223; a communication circuit 250 connected to the data terminal; a power conversion circuit 241 configured to reduce a voltage of a power signal input from a power supply device 202 via the power terminal by a factor of 1/N, increase a current of the power signal by a factor of N, and output the power signal; a battery 210 connected to the power conversion circuit; and a control circuit 299 connected to the communication circuit and the power conversion circuit. While charging the battery by using the power conversion circuit, the control circuit may control the communication circuit to communicate with the power supply device via the data terminal to increase, in a stepwise manner, a current of a power signal output from the power supply device to the electronic device from a first initial value to a first target current value which is set as a maximum output current value. The control circuit may identify a current range, to which an output current value belongs, among predetermined current ranges when an error in the communication occurs before a current value of the power signal output from the power supply device to the electronic device reaches the first target current value. The control circuit may count the number of error occurrences in the identified current range, and may set a second target current value, which is lower than the first target current value, as the maximum output current value, based on the counted number being equal to or greater than a threshold value. The control circuit may control the communication circuit to communicate the power supply device via the data terminal to increase, in a stepwise manner, the current of the power signal output from the power supply device to the electronic device from a second initial value to the second target current value.

The control circuit may recognize, as an error in the communication, reception of specified data from the power supply device via the communication circuit after reception of the power signal from the power supply device to the power terminal is stopped.

The control circuit may set a value lower than the current value of the power signal output from the power supply device to the electronic device as the second target current value when the error has occurred.

The control circuit may include a circuit integrated in a power management integrated circuit (PMIC). The control circuit may include a circuit integrated in an application processor. The power conversion circuit, the communication circuit, and the control circuit may be integrated in a single chip.

The control circuit may set the second initial value equal to the first initial value.

The control circuit may, based on the current output from the power supply device to the electronic device having reached the second target current value, transmit, via the communication circuit, a message requesting the power supply device to maintain the current of the power signal output from the power supply device to the electronic device at the second target current value, to the power supply device.

According to an embodiment, an electronic device 201 may include: a connector 220 including a power terminal 221 and a data terminal 223; a communication circuit 250 connected to the data terminal; a power conversion circuit 241 configured to reduce a voltage of a power signal input from a power supply device 202 via the power terminal by a factor of 1/N, increase a current of the power signal by a factor of N, and output the power signal; a battery 210 connected to the power conversion circuit; and a control circuit 299 connected to the communication circuit and the power conversion circuit. While charging the battery by using the power conversion circuit, the control circuit may control the communication circuit to communicate with the power supply device via the data terminal to increase, in a stepwise manner, power output from the power supply device to the electronic device from a first initial value to a first target power value which is set as a maximum output power value. The control circuit may identify a power range, to which an output power value belongs, among predetermined power ranges when an error in the communication occurs before the power output from the power supply device reaches the first target power value. The control circuit may count the number of error occurrences in the identified power range, and based on the counted number being equal to or greater than a threshold value, may set a second target power value, which is lower than the first target power value, as the maximum output power value. The control circuit may control the communication circuit to communicate with the power supply device via the data terminal to increase, in a stepwise manner, the power output from the power supply device to the electronic device from a second initial value to the second target power value.

The control circuit may recognize, as an error in the communication, reception of specified data from the power supply device via the communication circuit after reception of the power signal from the power supply device to the power terminal is stopped.

The control circuit may set a value lower than a power value output from the power supply device to the electronic device as the second target power value when the error has occurred.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201) comprising:
a connector (220) comprising a power terminal (221) and a data terminal (223);
a communication circuit (250) connected to the data terminal;
a power conversion circuit (241) configured to reduce a voltage of a power signal input from a power supply device (202) via the power terminal by a factor of 1/N, increase a current of the power signal by a factor of N, and output the power signal with the reduced voltage and increased current;
a battery (210) connected to the power conversion circuit; and
a control circuit (299) connected to the communication circuit and the power conversion circuit,
wherein the control circuit is configured to, while charging the battery by using the power conversion circuit:
control the communication circuit to perform communication with the power supply device via the data terminal so as to increase stepwise a current of a power signal, output from the power supply device to the electronic device, from a first initial value to a first target current value set as a maximum output current value;
in case that an error in the communication occurs before a current value of the power signal output from the power supply device to the electronic device reaches the first target current value, identify, among predetermined current ranges, a current range to which an output current value belongs;
count a number of error occurrences in the identified current range,
based on the counted number being equal to or greater than a threshold value, set, as the maximum output current value, a second target current value lower than the first target current value; and
control the communication circuit to perform communication with the power supply device via the data terminal so as to increase stepwise the current of the power signal, output from the power supply device to the electronic device, from a second initial value to the second target current value.

2. The electronic device of claim 1, wherein the control circuit is configured to recognize, as an error in the communication, a case where specified data is received from the power supply device via the communication circuit after the reception of the power signal from the power supply device to the power terminal is stopped.

3. The electronic device of claim 1, wherein the control circuit is configured to, in case that the error occurs, set, as the second target current value, a value lower than the current value of the power signal output from the power supply device to the electronic device.

4. The electronic device of claim 1, wherein the control circuit is integrated in a power management integrated circuit (PMIC).

5. The electronic device of claim 1, wherein the control circuit is integrated in an application processor.

6. The electronic device of claim 1, wherein the power conversion circuit, the communication circuit, and the control circuit are integrated into a single chip.

7. The electronic device of claim 1, wherein the control circuit is configured to set the second initial value to be equal to the first initial value.

8. The electronic device of claim 1, wherein the control circuit is configured to, based on the current, output from the power supply device to the electronic device, reaching the second target current value, transmit, to the power supply device via the communication circuit, a message requesting to maintain the current of the power signal, output from the power supply device to the electronic device, at the second target current value.

9. An electronic device (201) comprising:
a connector (220) comprising a power terminal (221) and a data terminal (223);
a communication circuit (250) connected to the data terminal;
a power conversion circuit (241) configured to reduce a voltage of a power signal input from a power supply device (202) via the power terminal by a factor of 1/N, increase a current of the power signal by a factor of N, and output the power signal with the reduced voltage and increased current;
a battery (210) connected to the power conversion circuit; and
a control circuit (299) connected to the communication circuit and the power conversion circuit,
wherein the control circuit is configured to, while charging the battery by using the power conversion circuit:
control the communication circuit to perform communication with the power supply device via the data terminal so as to increase stepwise power, output from the power supply device to the electronic device, from a first initial value to a first target power value set as a maximum output power value;
in case that an error in the communication occurs before the power output from the power supply device reaches the first target power value, identify, among predetermined power ranges, a power range to which an output power value belongs;
count a number of error occurrences in the identified power range;
based on the counted number being equal to or greater than a threshold value, set, as the maximum output power value, a second target power value lower than the first target power value; and
control the communication circuit to perform communication with the power supply device via the data terminal so as to increase stepwise the power, output from the power supply device to the electronic device, from a second initial value to the second target power value.

10. The electronic device of claim 9, wherein the control circuit is configured to recognize, as an error in the communication, a case where specified data is received from the power supply device via the communication circuit after the reception of the power signal from the power supply device to the power terminal is stopped.

11. The electronic device of claim 9, wherein the control circuit is configured to, in case that the error occurs, set, as the second target power value, a value lower than a power value output from the power supply device to the electronic device.

12. The electronic device of claim 9, wherein the control circuit is integrated in a power management integrated circuit (PMIC).

13. The electronic device of claim 9, wherein the control circuit is integrated in an application processor.

14. The electronic device of claim 9, wherein the power conversion circuit, the communication circuit, and the control circuit are integrated into a single chip.

15. The electronic device of claim 9, wherein the control circuit is configured to set the second initial value to be equal to the first initial value.
